# EUROPÄISCHE PATENTSCHRIFT

(11) **EP 1 216 457 B1**
(45) Veröffentlichungstag und Bekanntmachung des Hinweises auf die Patenterteilung: **13.07.2005**
(21) Anmeldenummer: 00982931.8
(22) Anmeldetag: 28.09.2000
(51) Int. Cl.: G07F 7/08, G07F 9/00, G07F 7/10

(54) **VERFAHREN ZUR ANSTEUERUNG EINES WARENAUSGABEAUTOMATEN UND ZUR ABRECHNUNG EINER AUSGEGEBENEN WARE**
METHOD FOR CONTROLLING A MACHINE DISPENSING GOODS AND CHARGING OF GOODS THUS DISPENSED
PROCEDE DE COMMANDE D'UN DISTRIBUTEUR D'ARTICLES ET DE FACTURATION DES ARTICLES EMIS

(30) Priorität: 28.09.1999 DE 19946529
(43) Veröffentlichungstag der Anmeldung: 26.06.2002
(73) Patentinhaber: T-Mobile Deutschland GmbH, 53227 Bonn (DE)
(72) Erfinder: LANGER, Michael, Richmond TW10 6UH (GB); LJUNGSTRÖM, Patrik, 53639 Königswinter (DE); MICHEL, UWE, 53604 Bad Honnef (DE); REINDL, Johann, 53604 Bad Honnef (DE); SCHMICKLER, Leonhard, 53229 Bonn (DE)
(74) Vertreter: Riebling, Peter, Dr.-Ing.
(86) Internationale Anmeldenummer: PCT/DE2000/003419
(87) Internationale Veröffentlichungsnummer: WO 2001/024120

(56) Entgegenhaltungen:
- WO-A-00/19748
- WO-A-00/38443
- WO-A-00/54237
- WO-A-98/11519
- WO-A-99/22346
- JP-A- 8 249 530

## Beschreibung

Die Erfindung betrifft ein Verfahren zur Ansteuerung eines Warenausgabeautomaten und zur Abrechnung einer ausgegebenen Ware gemäß dem Oberbegriff des unabhängigen Patentanspruchs.

Die WO-A-99 22346 offenbart ein Verfahren zur Ansteuerung eines Warenausgabeautomaten und zur Abrechnung einer ausgegebenen Ware unter Verwendung eines Mobilfunksystems. Ein Nutzer kann über sein Mobilfunktelefon eine Ware beim Warenausgabeautomaten ordern, indem er eine auf dem Automaten angegebene Automatenrufnummer wählt. Die Abrechnung der Ware erfolgt anhand von Abrechnungsdaten, die der Rufnummer des Nutzers zugeordnet und über dessen Telefonrechnung abgerechnet werden.

Aus der JP-A-08249530 A ist ebenfalls ein Verfahren zur Ansteuerung eines Warenausgabeautomaten und zur Abrechnung einer ausgegebenen Ware unter Verwendung eines Mobilfunksystems bekannt. Der Nutzer kann über sein Mobilfunktelefon einen Warenausgabeautomaten ansteuern, wobei er anhand seiner Rufnummer vom System erkannt wird. Es werden Abrechnungsdaten erzeugt, die zu einer Abrechnungssammelstelle gesendet werden. Dort erfolgt die Abrechnung der entstandenen Kosten.

### Der Erfindung liegt folgende Aufgabe zugrunde (Problem):

Es soll ein alternatives Verfahren zur einfachen Ansteuerung eines Warenausgabeautomaten und zur bargeldlosen Abrechnung der ausgegebenen Ware angegeben werden.

Die Lösung der Aufgabe erfolgt durch die im unabhängigen Patentanspruch angegebenen Merkmale.

Ein Warenausgabeautomat verfügt über ein Mobilfunk-Sende-/Ernpfangsgerät, z.B. ein GSM-Modul und kann vom Kunden vom Mobiltelefon aus über eine auf dem Automaten angebrachte Mobilfunk(kurz)rufnummer angerufen werden. Der Automat fordert den Kunden zur Auswahl der Ware auf und erzeugt nach dem Warenauswurf einen Rechnungsbeleg, der abgerechnet werden muß. Bei Prepaid-Kunden muß vor dem Auswurf der Ware eine Guthabenprüfung durchgeführt werden.

### Vorteile gegenüber dem Stand der Technik

Bisher bekannte Verfahren zur Abrechnung von Geschäften oder Dienstleistungen über ein Kommunikationsnetz sehen ein Führen des Minipayment-Kontos direkt auf dem IN-SCP vor. Dadurch wird eine Banklizenz für den Betreiber erforderlich. Dies wird bei der vorliegenden Erfindung umgangen, in dem ein Konto bei einer anderen kontoführenden Stelle angesprochen wird.

Die Sprachansteuerung des Automaten ist eine wichtige Vereinfachung für den GSM-Nutzer gegenüber z.B. SMS-Ansteuerung.
Außerdem ist durch das Reservierungsverfahren eine Guthabenprüfung on-line möglich und dennoch kann der elektronische Rechnungsbeleg off-line verarbeitet werden. Über die Rufnummern können Reservierung und Beleg eindeutig einander zugeordnet werden.

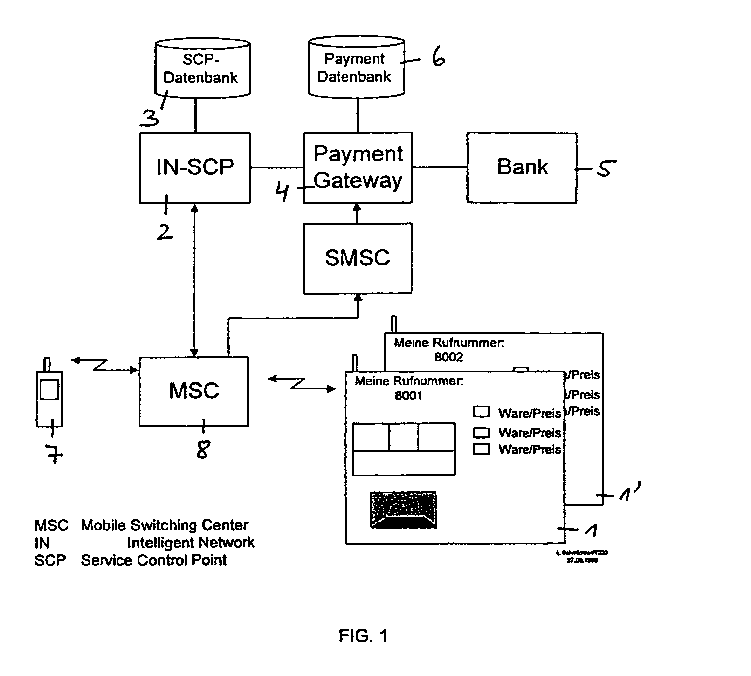

Figur 1 zeigt ein Beispiel für eine erfindungsgemäße Systemarchitektur.

Der Warenausgabeautomat 1, 1' verfügt über ein GSM-Modul und eine GSM-Rufnummer. Am Automaten können Waren zu unterschiedlichen Preisen ausgewählt werden. Auf dem Automaten ist eine (Kurz)rufnummer angegeben.

Der IN-SCP 2 (Intelligent-Network Service Control Point) verfügt über eine Datenbank 3, in der die Kurzwahl des Warenausgabeautomaten auf eine Langwahlrufnummer abgebildet wird. Dabei kann die Ortsinformation aus den Rufdaten des Anrufs des GSM-Nutzers herangezogen werden. Außerdem ist der IN-SCP mit einem Payment Gateway 4 verbunden.

Das Payment Gateway 4 hat Online-Zugriff auf ein Minipayment-Konto, das bei einer Bank 5 geführt wird. In der Payment-Datenbank 6 ist für jeden Nutzer eine Minipayment-Kontonummer eingerichtet. Der aktuelle Kontostand ist in der Payment-Datenbank 6 durch regelmäßigen Abgleich oder Online-Zugriff auf die Bank 5 jederzeit bekannt.

Der GSM-Nutzer steht mit seinem Mobilfunkendgerät 7 vor einem Warenausgabeautomaten 1, 1'. Er wählt die auf dem Automaten angegebene (Kurz)rufnummer. In der MSC 8 wird erkannt, dass es sich um eine Sondernummer handelt, die im IN-SCP 2 zu bewerten ist. Von der MSC wird eine Kommunikation mit den IN-SCP aufgebaut und die Rufnummer des GSM-Nutzers, die gewählte Rufnummer und der Standort des GSM-Nutzers übergeben.

Der IN-SCP ermittelt die tatsächliche Rufnummer des Warenausgabeautomaten. Gleichzeitig stellt er eine Verbindung zum Payment Gateway her und fordert an, dass auf dem Konto des mittels seiner Rufnummer eindeutig identifizierten GSM-Nutzers eine Reservierung für einen Maximalbetrag von z.B. 5 DM mit Bezug auf den Warenausgabeautomaten durchgeführt wird.

Das Payment Gateway ermittelt anhand der Rufnummer des GSM-Nutzers seine Minipayment-Kontonummer und den aktuellen Kontostand. Bei ausreichendem Guthaben wird die Reservierung mit Bezug auf die Rufnummer des Warenausgabeautomaten durchgeführt und dem IN-SCP positiv quittiert. Ein reserviertes Guthaben steht bis zu seiner Löschung nicht für andere Bezahlungen zur Verfügung. Die Reservierung wird negativ quittiert, wenn das Guthaben nicht ausreicht, der Kunde in einer Blacklist steht oder über kein Konto verfügt. Ist die Quittierung vom Payment Gateway negativ, so teilt der IN-SCP dem MSC mit, daß die Verbindung abgebrochen werden soll. Das MSC kann dem Nutzer noch eine Ansage einspielen, um den Grund des Verbindungsabbruchs mitzuteilen. Ist die Quittierung Payment Gateway positiv, so teilt der IN-SCP dem MSC die Langrufnummer des Warenausgabeautomaten mit. Das MSC baut eine Sprachverbindung zum Automaten auf. Dieser entnimmt der ISDN-Signalisierung die Rufnummer des GSM-Nutzers und fordert den Nutzer auf, eine Ware auszuwählen. Der Nutzer kommuniziert mit dem Warenausgabeautomaten über sein Mobiltelefon. Dabei kann der Automat dem Nutzer noch eine Ansage einspielen. Danach kann die GSM-Verbindung zwischen Nutzer und Warenausgabeautomat vom Automaten ausgelöst werden. Der Nutzer drückt nun eine Auswahltaste, die Ware wird ausgeworfen und der Automat erzeugt einen elektronischen Rechnungsbeleg. Der Rechnungsbeleg enthält z.B. Automatenrufnummer, GSM-Nutzerrufnummer, Waren-Kennung und Preis. Er wird vom Automaten z.B. über GSM-Kurznachricht oder GSM-USSD zum Payment Gateway übertragen.

Das Payment Gateway empfängt den elektronischen Rechnungsbeleg und ermittelt anhand der GSM-Rufnummer des Nutzers dessen Minipayment-Konto. Es erkennt anhand der Automatenrufnummer die vorher vom IN-SCP durchgeführte Reservierung und löscht diese. Der Preis für die Ware wird vom Konto des Nutzers abgebucht und über einen Gutschriftbeleg dem Konto des Automatbetreibers gutgeschrieben.

Der Zusammenhang zwischen Reservierung und Rechnungsbeleg kann auch über eine Referenznummer hergestellt werden. Das Payment Gateway vergibt bei der Reservierung eine Referenznummer und teilt sie in der positiven Quittierung dem IN-SCP mit. Dieser übergibt sie beim Durchschalten der Verbindung z.B. als UUS-Parameter oder als Subaddress an den Automaten. Der Automat fügt diese Referenznummer dem Rechnungsbeleg bei, und das Payment Gateway kann Reservierung und Rechnungsbeleg eindeutig zuordnen.
Das Payment Gateway löscht eine Reservierung nach einer vereinbarten Maximalzeit automatisch, wenn bis dahin vom Automaten kein Rechnungsbeleg eingetroffen ist. Das reservierte Guthaben steht dann für andere Bezahlungen wieder zur Verfügung.

## Patentansprüche

1. Verfahren zur Ansteuerung und zum Betrieb eines Warenausgabeautomaten (1), der über ein Mobilfunk-Sende-/Empfangsgerät verfügt und von einem Mobilfunkendgerät (7) eines Nutzers über eine auf dem Automaten angebrachte Mobilfunk(kurz)rufnummer über ein Mobilfunknetz angerufen werden kann, wobei der Warenausgabeautomat (19)den Nutzer zur Auswahl der Ware auffordert und nach dem Warenauswurf einen Rechnungsbeleg erzeugt,
**dadurch gekennzeichnet,**
**dass** der Rechnungsbeleg über ein Payment Gateway (4) abgerechnet wird, das Zugriff auf ein bei einer Bank (5) eingerichtetes Minipayment-Konto des Nutzers hat, dessen Minipayment-Kontonummer anhand der Mobilfunkrufnummer des Nutzers ermittelt wird, wobei in einem Intelligent-Network Service Control Point (2) des Mobilfunknetzes die tatsächliche Rufnummer des Warenausgabeautomaten (1) ermittelt und eine Verbindung zum Payment Gateway (4) hergestellt wird und eine Anforderung erfolgt, dass auf dem Minipayment-Konto des mittels seiner Rufnummer eindeutig identifizierten Nutzers bei ausreichendem Guthaben eine Reservierung für einen bestimmten Maximalbetrag mit Bezug auf den Warenausgabeautomaten (1) durchgeführt und gegenüber dem Intelligent-Network Service Control Point (2) quittiert wird, wobei bei einer negativen Quittierung vom Payment Gateway, der Intelligent-Network Service Control Point (2) dem Mobile Switching Center (8) mitteilt, die Verbindung abzubrechen, und bei positiver Quittierung des Payment Gateway (4), der Intelligent-Network Service Control Point (2) dem Mobile Switching Center (8) die Langrufnummer des Warenausgabeautomaten (1) mitteilt, wobei das Mobile Switching Center (8) eine Sprachverbindung zum Automaten (1) aufbaut.

2. Verfahren nach Anspruch 1, **dadurch gekennzeichnet, daß** eine Abrechnung der ausgegebenen Ware durch eine Kopplung von Standard Intelligent-Network-Verkehrssteuerung mit Standard-(Internet-) Paymentsystemen erfolgt.

3. Verfahren nach einem der vorhergehenden Ansprüche, **dadurch gekennzeichnet, daß** bei ausreichendem Guthaben auf dem Minipayment-Konto die Reservierung mit Bezug auf die Rufnummer des Warenausgabeautomaten (1) durchgeführt und dem Intelligent-Network Service Control Point (2) positiv quittiert wird, wobei ein reserviertes Guthaben bis zu seiner Löschung nicht für andere Bezahlungen zur Verfügung steht.

4. Verfahren nach einem der vorhergehenden Ansprüche, **dadurch gekennzeichnet, daß** bei positiver Quittierung der Automat (1) der ISDN-Signalisierung die Rufnummer des Nutzers entnimmt und den Nutzer auffordert, eine Ware auszuwählen, wobei der Nutzer mit dem Warenausgabeautomaten (1) über sein Mobiltelefon (7) kommuniziert, dass danach die GSM-Verbindung zwischen Nutzer und Warenausgabeautomat vom Automaten ausgelöst wird, dass der Nutzer eine Auswahltaste drückt, dass die Ware ausgeworfen wird und der Automat (1) einen elektronischen Rechnungsbeleg erzeugt.

5. Verfahren nach einem der vorhergehenden Ansprüche, **dadurch gekennzeichnet, daß** der Rechnungsbeleg die Automatenrufnummer, die GSM-Nutzerrufnummer, eine Waren-Kennung und den Preis enthält.

6. Verfahren nach einem der vorhergehenden Ansprüche, **dadurch gekennzeichnet, daß** der Rechnungsbeleg vom Automaten (1) über eine GSM-Kurznachricht oder GSM-Unstructured Supplementary Service Data zum Payment Gateway (4) übertragen wird.

7. Verfahren nach einem der vorhergehenden Ansprüche, **dadurch gekennzeichnet, daß** das Payment Gateway (4) den elektronischen Rechnungsbeleg empfängt, anhand der GSM-Rufnummer des Nutzers dessen Minipayment-Konto ermittelt und anhand der Automatenrufnummer die vorher vom Intelligent-Network Service Control Point (2) durchgeführte Reservierung erkennt und löscht, wobei der Preis für die Ware vom Konto des Nutzers abgebucht und über einen Gutschriftbeleg dem Konto des Automatenbetreibers gutgeschrieben wird.

8. Verfahren nach einem der vorhergehenden Ansprüche, **dadurch gekennzeichnet, daß** der Warenausgabeautomat (1) über eine Sprachverbindung angesteuert wird.

## Claims

1. Method for activating and operating an automatic vending machine (1) which has a mobile radio telephone transmitting/receiving device and can be called from a mobile radio telephone terminal (7) of a user via a mobile radio telephone (short) call number installed on the machine via a mobile radio telephone network, wherein the automatic vending machine (19) requests the user to select the item and after the item has been ejected produces a voucher, **characterised in that** the voucher is billed via a payment gateway (4) which has access to a mini-payment account of the user set up at a bank (5), the mini-payment account number of which is determined using the user's mobile radio telephone call number, the actual call number of the automatic vending machine (1) being determined at an intelligent network service control point (2) of the mobile radio telephone network and a connection produced to the payment gateway (4) and a request following for a reservation for a certain maximum amount relating to the automatic vending machine (1) to be carried out on the mini-payment account of the user clearly identified by his/her call number if there is sufficient credit and acknowledged in respect of the intelligent network service control point (2), wherein if there is a negative acknowledgement from the payment gateway the intelligent network service control point (2) tells the mobile switching centre (8) to terminate the connection and if there is positive acknowledgement from the payment gateway (4) the intelligent network service control point (2) tells the mobile switching centre (8) the long call number of the automatic vending machine (1), wherein the mobile switching centre (8) creates a voice connection to the machine (1).

2. Method according to claim 1, **characterised in that** billing for the item issued takes place by coupling standard intelligent network traffic control to standard (internet) payment systems.

3. Method according to one of the preceding claims, **characterised in that** if there is sufficient credit in the mini-payment account the reservation relating to the call number of the automatic vending machine (1) is carried out and positively acknowledged to the intelligent network service control point (2), wherein reserved credit is not available for other payments until it has been cancelled.

4. Method according to one of the preceding claims, **characterised in that** if there is positive acknowledgement the machine (1) extracts the user's call number from the ISDN signalling and requests the user to select an item, wherein the user communicates with the automatic vending machine (1) via his/her mobile telephone (7) that accordingly the GSM connection between user and automatic vending machine is triggered by the machine, the user presses a selection button, the item is ejected and the machine (1) produces an electronic voucher.

5. Method according to one of the preceding claims, **characterised in that** the voucher contains the machine call number, the GSM user call number, an item identifier and the price.

6. Method according to one of the preceding claims, **characterised in that** the voucher is transmitted from the machine (1) to the payment gateway (4) via a GSM short message or GSM unstructured supplementary service data.

7. Method according to one of the preceding claims, **characterised in that** the payment gateway (4) receives the electronic voucher, using the user's GSM call number determines his/her mini-payment account and using the machine call number identifies and cancels the reservation previously carried out by the intelligent network service control point (2), the price for the item being debited from the user's account and credited to the account of the machine operator via a credit note.

8. Method according to one of the preceding claims, **characterised in that** the automatic vending machine (1) is activated via a voice connection.

## Revendications

1. Procédé pour commander et faire fonctionner un distributeur automatique d'articles (1) qui dispose d'un émetteur/récepteur radiotéléphonique et qui peut être appelé par un terminal radiotéléphonique mobile (7) d'un utilisateur par l'intermédiaire d'un réseau radiotéléphonique mobile grâce à un numéro d'appel (abrégé) mobile installé sur le distributeur, le distributeur automatique d'articles (19) invitant l'utilisateur à sélectionner l'article et produisant un justificatif après la remise de l'article,
**caractérisé en ce que** le justificatif est décompté par l'intermédiaire d'une passerelle de paiement (4) qui a accès à un compte de minipaiement de l'utilisateur qui est installé dans une banque (5) et dont le numéro de compte est déterminé à l'aide du numéro d'appel mobile de l'utilisateur, étant précisé que dans un point de commande de service de réseau intelligent (2) du réseau mobile, le numéro d'appel réel du distributeur automatique d'articles (1) est déterminé, une liaison est établie avec la passerelle de paiement (4) et il est demandé que sur le compte de minipaiement de l'utilisateur identifié clairement grâce à son numéro d'appel, une réservation soit faite par rapport au distributeur (1) pour un montant maximal défini, si le crédit est suffisant, et fasse l'objet d'un accusé de réception auprès du point de commande de service de réseau intelligent (2), étant précisé qu'en cas d'accusé de réception négatif de la part de la passerelle de paiement, le point de commande de service de réseau intelligent (2) fait savoir au centre de commutation du service mobile (8) qu'il faut couper la liaison, et qu'en cas d'accusé de réception positif de la part de la passerelle de paiement (4), le point de commande de service de réseau intelligent (2) communique au centre de commutation du service mobile (8) le numéro d'appel long du distributeur automatique (1), moyennant quoi le centre de commutation du service mobile (8) établit une liaison vocale avec le distributeur (1).

2. Procédé selon la revendication 1, **caractérisé en ce qu'**une facturation de l'article remis a lieu grâce à un couplage d'une commande de réseau intelligent standard avec des systèmes de paiement (par Internet) standard.

3. Procédé selon l'une des revendications précédentes, **caractérisé en ce que** si le crédit est suffisant sur le compte de minipaiement, la réservation est faite par rapport au numéro d'appel du distributeur automatique d'articles (1) et un accusé de réception positif est délivré au point de commande de service de réseau intelligent (2), étant précisé qu'un crédit réservé n'est pas disponible, jusqu'à ce qu'il soit supprimé, pour d'autres paiements.

4. Procédé selon l'une des revendications précédentes, **caractérisé en ce que** dans le cas d'un accusé de réception positif, le distributeur (1) trouve dans la signalisation RNIS le numéro d'appel de l'utilisateur et invite l'utilisateur à sélectionner un article, l'utilisateur communiquant avec le distributeur automatique d'articles (1) grâce à son téléphone mobile (7), **en ce que** la liaison GSM entre l'utilisateur et le distributeur automatique d'articles est ensuite déclenchée par le distributeur, **en ce que** l'utilisateur appuie sur une touche de sélection, **en ce que** l'article est remis et le distributeur (1) produit un justificatif électronique.

5. Procédé selon l'une des revendications précédentes, **caractérisé en ce que** le justificatif contient le numéro d'appel du distributeur, le numéro d'appel de l'utilisateur GSM, une identification d'article et le prix.

6. Procédé selon l'une des revendications précédentes, **caractérisé en ce que** le justificatif est transmis par le distributeur (1) à la passerelle de paiement (4) grâce à un message court GSM ou à des données de service supplémentaire non structurées GSM.

7. Procédé selon l'une des revendications précédentes, **caractérisé en ce que** la passerelle de paiement (4) reçoit le justificatif électronique, détermine à l'aide du numéro d'appel GSM de l'utilisateur le compte de minipaiement de celui-ci et détecte et annule à l'aide du numéro d'appel de distributeur la réservation faite auparavant par le point de commande de service de réseau intelligent (2), le prix pour l'article étant prélevé sur le compte de l'utilisateur et étant porté au crédit du compte de l'exploitant du distributeur grâce à un avis de crédit.

8. Procédé selon l'une des revendications précédentes, **caractérisé en ce que** le distributeur automatique d'articles (1) est commandé par l'intermédiaire d'une liaison vocale.
